# EUROPEAN PATENT APPLICATION

(11) **EP 0 789 320 A2**
(43) Date of publication of application: **13.08.1997**
(21) Application number: 97300672.9
(22) Date of filing: 03.02.1997
(51) Int. Cl.: G06K 11/18

(54) **Computer mouse and holder**

(30) Priority: 09.02.1996 US 599205
(71) Applicant: Pegasus Technologies Ltd., Holon (IL)
(72) Inventor: Shenholz, Gideon, Tel Aviv 64073 (IL); Zloter, Yitzhak, Holon (IL)
(74) Representative: Gilmour, David Cedric Franklyn

(57) **Abstract**

A mouse-like computer input device for inputting information to a computer system by a user, which includes a mobile unit which includes a transmitter. The mobile unit is detachably connected to one of the user's fingers, preferably via a ring-like structure which fits over or around the user's an index finger. When detached from the user's finger, the mobile unit can be attached to a holder which may resemble a joystick or a gun handle which can be grasped by the user's hand. A stationary receiving system receives signals transmitted by the transmitter. A suitable processor is used for processing the received signals to produce information usable by the computer system related to the position of the mobile unit.

## Description

### FIELD AND BACKGROUND OF THE INVENTION

The present invention relates to computer input devices and, more particularly, to the type of computer input device known as a mouse which allows the user to point to different portions of the computer display by changing the location of the mouse.

The computer mouse is becoming increasingly popular. More and more computer software applications, including various drafting programs, word processors, spreadsheets, databases, games and many others, make use of various regions of the display screen, or use icons arrayed around the display screen, to activate various functions. Activation of the functions is effected by first grasping the mouse and moving it, typically on a flat two-dimensional surface, such as a desk top or a special tablet, so as to cause the display cursor to move to the desired region or icon on the display screen. Once the cursor is properly positioned on the display screen, the function is selected by pressing an indicator using a suitable key which is typically also located on the mouse.

More recently, it has been proposed to use a mouse which can be moved in three dimensions rather than in just two dimensions. See European Patent Application 92306228.5 (Publication No. 0 526 015) which is incorporated by reference in its entirety for all purposes as if fully set forth herein.

Presently known mouse devices are designed to be held in one of the user's hands. The mouse includes a long wire, resembling the tail of a mouse, which runs from the mouse to a suitable computer port, through which the mouse device is able to communicate with the computer. In order to use a conventional mouse the user must temporarily interrupt his or her keyboard input activities to grasp the mouse in one of the user's hands. Between uses the mouse typically lies on the desk or on a special tablet in the vicinity of the keyboard. Once the mouse has been grasped, it is then maneuvered, typically on the desk or on a special two-dimensional pad or tablet, or, in the case of a three-dimensional mouse, in any convenient space, such as, for example, the space in front of the computer monitor, so as to move the cursor to the desired location on the display screen. In certain applications, the movements of the mouse are continuously tracked by the cursor on the video display unit. Once the cursor is properly positioned one or more of the keys located on the mouse is depressed to enter the mouse's position into the computer or to carry out any other desired function. Once use of the mouse has been concluded, the mouse is replaced onto the desk or pad and the user returns his or her hand to the keyboard to resume keyboard input activities.

The process of using a conventional mouse is thus seen to be highly disruptive of keyboard inputting activities and can become a major inconvenience, especially where a software application is used which calls for a large number of alternating keyboard and mouse inputs.

There is thus a widely recognized need for, and it would be highly advantageous to have, a mouse-like computer input device which would allow the user to intermittently employ the device without unduly occupying the user's hand and with minimal disruption of the user's keyboard activities.

In certain applications, however, it is highly desirable to be able to have the option of, when desired, grasping the three-dimensional mouse in a way which mimics or imitates the holding of a handgun, a joystick and the like, rather than wearing the mouse ring-style on the finger.

### SUMMARY OF THE INVENTION

According to the present invention there is provided a computer input assembly for inputting information to a computer system by a user which can be alternately worn on a user's finger or grasped by the user's hand, comprising: (a) a mobile unit, the mobile unit including a transmitter for transmitting signals; (b) means for detachably connecting the mobile unit to the user's finger; (c) a stationary receiving system for receiving the transmitted signals; (d) processing means for processing the received signals to produce information usable by the computer system related to the position of the mobile unit; and (e) a holder for accommodating the mobile unit so as to allow the user to grasp the mobile unit with his hand.

Also according to the present invention, there is provided a computer input device for inputting information to a computer system by a user, comprising: (a) a stationary transmitter for transmitting signals; (b) a mobile unit, the mobile unit including a reflector for reflecting the transmitted signals; (c) means for detachably connecting the mobile unit to one hand of the user; (d) a stationary receiving system for receiving the reflected signals; and (e) processing means for processing the received signals to produce information usable by the computer system related to the position of the mobile unit.

Further according to the present invention, there is provided a computer input device for inputting information to a computer system by a user, comprising: (a) a stationary transmitting system for transmitting signals, the signals being identifiable as to their source; (b) a mobile unit, the mobile unit including a receiver for receiving the transmitted signals; (c) means for detachably connecting the mobile unit to one hand of the user; and (d) processing means for processing the received signals to produce information usable by the computer system related to the position of the mobile unit.

According to further features in preferred embodiments of the invention described below, the position of the mobile unit is determined by the processing means by using the time required for signals to travel to the receiving system.

According to still further features in the described preferred embodiments, the means for detachably connecting the mobile unit to one hand of the user includes a ring-like member for attachment to a finger of the user, preferably either the left or right index finger.

The present invention successfully addresses the shortcomings of the presently known configurations by providing a mouse-like computer input device which is detachably mounted onto one of the user's hands in such a way as to enable the user to carry out normal keyboard inputting activities, as well as other activities requiring the use of the hands, while the input device continues to be attached to one of the user's hands, ready for essentially immediate use. The present invention makes it possible, when desired, to remove the ring-like mouse from the finger and to attach it to a holder so as to resemble the grasping of a joystick or a TV remote control unit or of a revolver, handgun, pistol, sword or other similar weapon, and the like.

### BRIEF DESCRIPTION OF THE DRAWINGS

The invention is herein described, by way of example only, with reference to the accompanying drawings, wherein:
FIG. 1 is a perspective view of one embodiment of an input device according to the present invention wherein the mobile unit includes a transmitter;
FIG. 2 shows another embodiment of an input device according to the present invention which uses a separate stationary transmitter;
FIG. 3 shows yet another embodiment of an input device according to the present invention which uses a cordless mobile unit;
FIG. 4 shows yet another embodiment of an input device according to the present invention wherein the mobile unit includes a receiver;
FIG. 5 shows, in side view, an illustrative embodiment of a mobile unit according to the present invention as it might appear when mounted on the user's index finger;
FIG. 6 is a plan view of the mobile unite of Figure 5;
FIG. 7 is a disassembled view showing a ring-like mouse and a mouse holder according to the present invention;
FIG. 8 shows the ring-like mouse and holder as they might appear when the mouse is attached to the holder to provide a joystick-like three dimensional mouse;
FIG. 9 shows the mouse and holder combination of Figure 8 as it would appear in use.

### DESCRIPTION OF THE PREFERRED EMBODIMENTS

The present invention is of a computer input device which is unobtrusively attached to the user's hand so as to be more readily available for use and which can readily be installed on a holder to resemble a handgun, joystick and the like.

The principles and operation of a device according to the present invention may be better understood with reference to the drawings and the accompanying description.

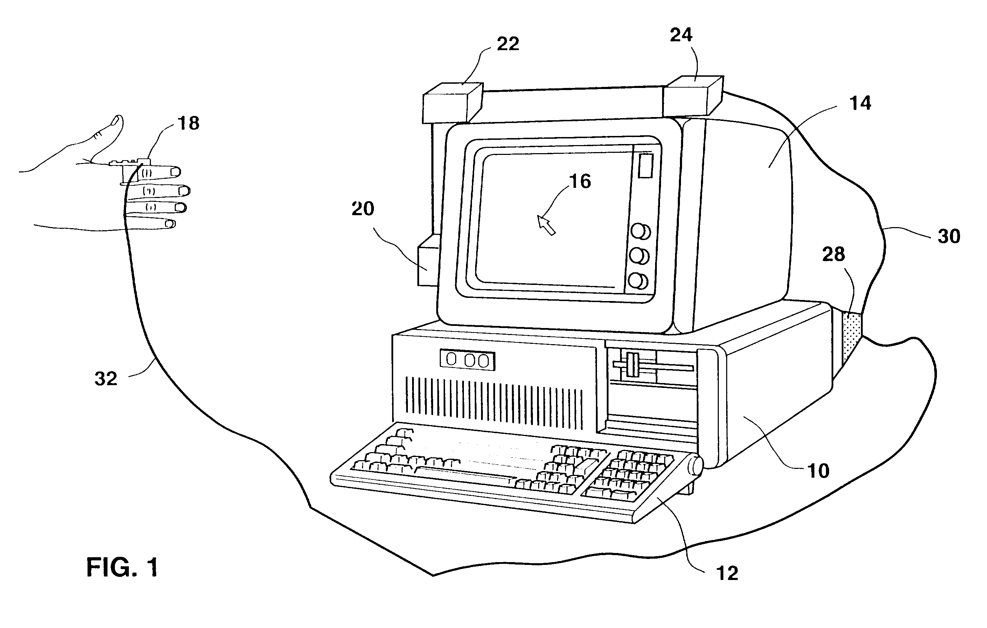

Referring now to the drawings, Figure 1 schematically illustrates one possible embodiment of a device according to the present invention. Depicted in Figure 1 is a typical computer work station which includes a computer **10**, a keyboard **12** and a monitor **14**. Keyboard **12** is commonly used for inputting information into the computer system. Of increasing importance as an input device is the class of devices widely known as a 'mouse' which are used to cause a cursor **16** to move around monitor **14**.

A conventional mouse works by sliding the mouse on a two-dimensional surface. A sphere projecting from the lower portion of the mouse contacts the two-dimensional surface and friction between the surface and the sphere causes the sphere to roll. The direction and extent of the rolling is sensed and the mouse movement is translated into a change of position of cursor **16** on monitor **14**.

A device according to the present invention is a mouse-like device in its function but, unlike a conventional mouse, includes a mobile unit **18** which lacks a rolling sphere and need not be moved along, and in contact with, a two-dimensional surface. Rather, mobile unit **18** includes suitable means for sending or reflecting signals to receivers or receiving signals from transmitters, as described in more detail below.

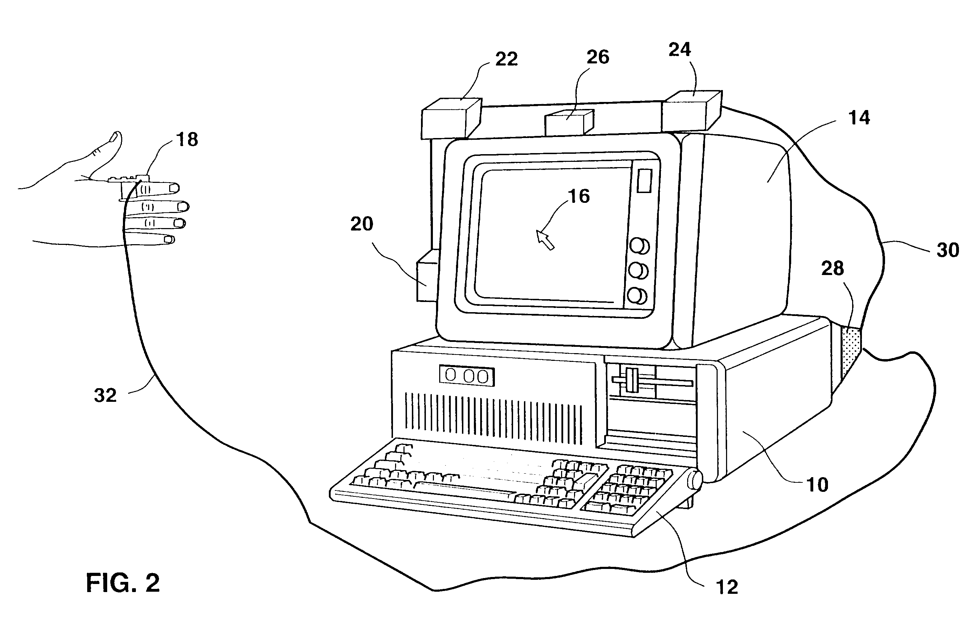

In the embodiment shown in Figure 1, mobile unit **18** includes a transmitter (not shown) which transmits signals, e.g., ultrasonic waves, to receivers **20**, **22**, **24**, while in the embodiment depicted in Figure 2, reflecting mobile unit **118** includes a reflector (not shown) which serves to reflect signals, e.g., visible light, which emanate from signal source **26** to receivers **20**, **22**, **24**.

Receivers **20**, **22**, **24**, represent one example of a receiving system which might be used as part of an input device according to the present invention. Various receiver systems may be envisioned, including those with fewer, or with more, receivers than the three shown in Figures 1 and 2. The use of three (or more) receivers **20**, **22**, **24**, makes it possible to determine the exact position of mobile unit **18** in three-dimensional space. If only two receivers are used, it is possible to locate mobile unit **18** in two-dimensional space, which may be suitable for many applications.

The receivers are preferably fixed, or stationary, relative to each other and are arrayed at suitable separations and orientations from each other. Most preferably, the receivers are attached to monitor **14**, for example, as shown in Figures 1 and 2. Information from receivers **20**, **22**, **24**, is fed to a suitable processor **28**, preferably a microprocessor, either wirelessly or through a suitable receiver electrical connection **30**. The processor is alternatively located inside the computer, as on a special board, in which case the item designated **28** is merely an adaptor or plug leading to the processor. For ease of exposition, item **28** is referred to hereinafter as a processor.

Similarly, mobile unit **18** is connected to processor **28** through a suitable mobile unit electrical connection **32** or, preferably, mobile unit **18** and processor **28** communicate wirelessly, as described in more detail below. Mobile unit electrical connection **32** can also be used to supply mobile unit **18** with electrical power.

Processor **28** may be of any suitable type provided that it is able to process signals received by receivers **20**, **22**, **24**, so as to produce information which is usable by the computer system relating to the position of mobile unit **18**.

Preferably, the determination of the position of mobile unit **18** is made by ascertaining the time required for the signals transmitted by the transmitter, or reflected by the reflector, in mobile unit **18** to reach the various receivers of the receiving system.

Preferably, special algorithms executed by processor **28** translate the position of mobile unit **18** to a joystick motion tracker with a neutral point and relative motion in three dimensions.

Thus, in the embodiment shown in Figure 1, wherein mobile unit **18** is connected to processor **28** by electrical wire **32**, a suitable timing mechanism, which may be part of processor **28**, is used to generate a signal whose timing is related to the transmission of a specific signal by the transmitter of mobile unit **18**. Preferably, the timing signal is sent to the transmitter of mobile unit **18** to activate the transmission of a signal. The transmitted signal is received by each of receivers **20**, **22**, **24**, at slightly different times, depending on the distance of each of receivers **20**, **22**, **24**, from the transmitter of mobile unit **18**.

Preferably, the transmitted signal is of relatively low speed such as might be the case when ultrasound and the like is used, so as to accentuate the different distances from mobile unit **18** to each of the several receivers and thereby enhance the resolution of the position determination. Processor **28** then uses the measured elapsed times for the signal to reach each of the receivers to calculate the distance of mobile unit **18** from the various receivers and thus the position of mobile unit **18** may be ascertained.

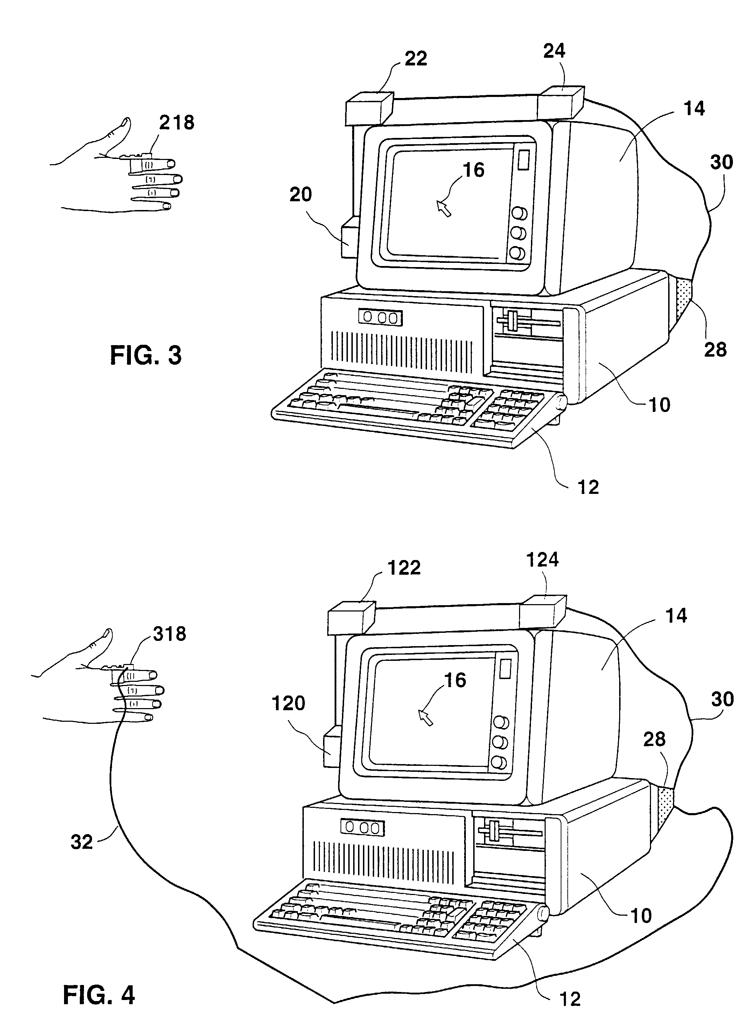

Preferably, mobile unit **18** is not physically connected to processor **28** through an electrical wire **32** but rather, as is shown in Figure 3, free-standing mobile unit **218** is a free-standing unit. This makes it even more convenient to use a device according to the present invention and further reduces, or even eliminates, the interference offered by the device to other activities, such as, for example, normal keyboard activities.

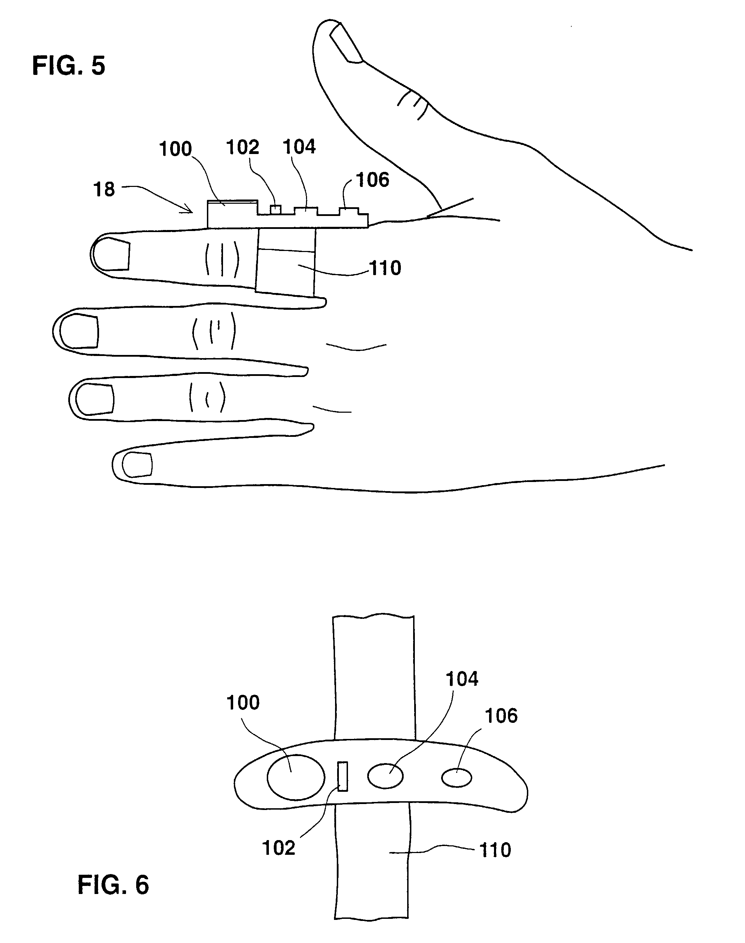

Free-standing mobile unit **218** needs to include a suitable electrical energy source, such as an appropriate battery. Preferably, free-standing mobile unit **218** includes a secondary transmitter (**102** in Figures 5 and 6) which is capable of transmitting pulses of much greater speed than the transmitted signals described above. For example, the secondary transmitter might be an electromagnetic radiation transmitter, such as an infrared transmitter. The high speed pulses may be used in the determination of the time required for the low speed signals to travel from the transmitter to the receivers. For example, both the high speed and the low speed transmitter could simultaneously send out a signal. The high speed signal is virtually instantaneously received by all the receivers simultaneously, thus marking the beginning of the transmission of the low speed signal. The travel time of the low speed signal to each of the receivers can then be accurately determined and used to determine the position of free-standing mobile unit **218**.

In an alternative embodiment shown in Figure 4, receiving mobile unit **318** includes a receiver while transmitting units **120**, **122**, and **124** include transmitters each of which transmits a signal which is, in some way, distinguishable from the signals transmitted by the other transmitters. In this embodiment, the position of receiving mobile unit **318** is determined by calculating the time required for signals from each of transmitting units **120**, **122**, and **124**, to arrive at the receiver of receiving mobile unit **318**.

Mobile unit **18** in each of the various embodiments described above may be configured in any of a large number of configurations, provided that mobile unit **18** is capable of being detachably connected to one hand of the user, preferably to one of the user's fingers, most preferably to the index finger, as shown in Figure 5. Preferably, mobile unit **18** is configured or contoured so as to accommodate either of the user's index fingers, so as to allow right-handed and left-handed users to select the location most suitable for their particular needs.

Mobile unit **18** includes a positioning unit **100** which may be any of a number of devices or mechanisms. For example, in the embodiments of Figures 1 and 3, positioning unit **100** includes a transmitter, while in the embodiment of Figure 2 positioning unit **100** is a reflector and in the embodiment of Figure 4 positioning unit **100** is a receiver.

In the embodiment of Figure 3, free-standing mobile unit **218** may further include a second transmitter **102**, such as an infrared transmitter. In the configurations shown in Figures 1, 2 and 4, each of mobile units **18**, **118** and **318**, is connected to mobile unit electrical wire **32**.

A mobile unit for use in a system according to the present invention preferably also includes one or more input buttons or keys **104** and **106** (Figures 5 and 6) allowing the user to provide additional information to the computer system.

The means of attachment of mobile unit **18** to the user's hand is preferably a ring-like structure or strap **110** which surrounds the user's finger and firmly holds mobile unit **18** in place. The ring-like structure **110** may be rigid or flexible and may be made of a single ring which is brought over the user's finger or may alternatively be made up of two portions which can be readily reversibly connected to surround the user's finger (Figure 6). Preferably, strap **110** is an open and flexible designed to close onto itself, as through the use of double-side Velcro or similar materials, so as to surround the user's finger.

In operation, it may be desirable to 'wear' mobile unit **18** on the outward-facing portion of the user's finger where it least interferes with normal flexing and movement of the finger. When it is desired to use the device, the thumb or the other hand can be used to rotate the device approximately 90° to the side of the index finger facing the thumb. The thumb can then be used to depress the input buttons or keys **104** or **106**.

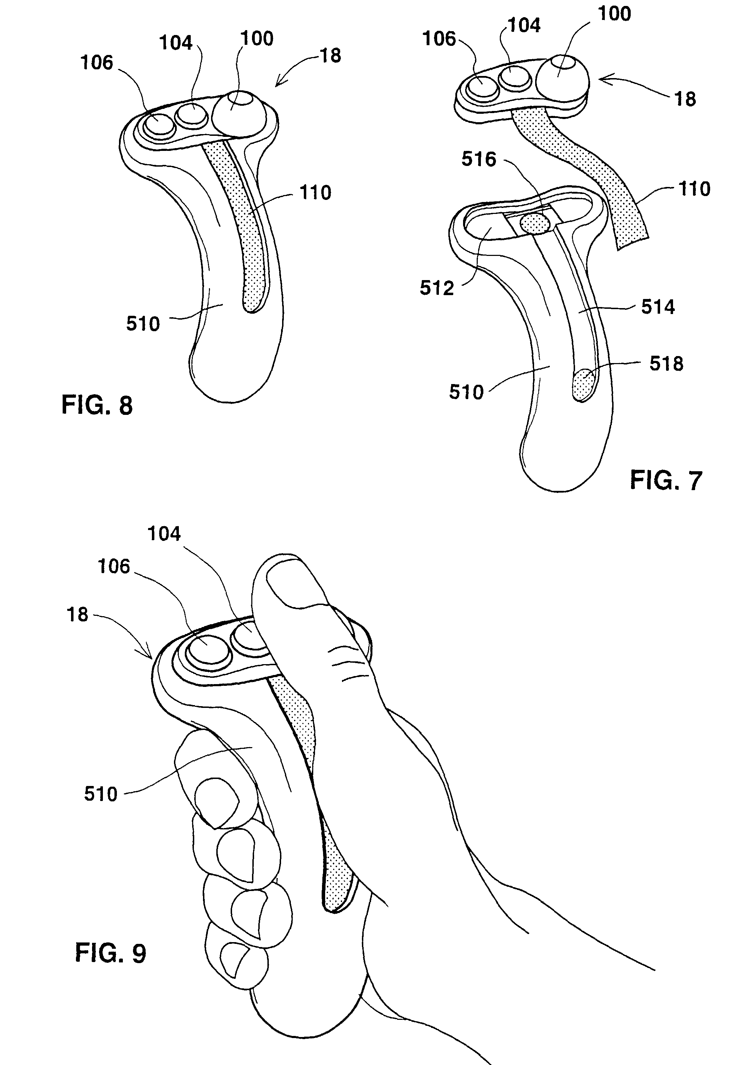

In a preferred embodiment of the present invention, strap **110** (Figure 7) is attached to mobile unit **18**, preferably with a portion of strap **110** located directly below mobile unit **18**. Strap **110** is made of or includes, at least in part, a material, such as Velcro or various similar materials, which are capable of sticking to itself and/or to similar materials. Alternatively, the connection of strap **110** may be effected by various other suitable means. Thus, to wear mobile unit **18** around the user's finger, strap **110** is wrapped around the finger so that one portion of strap **110** overlaps, and adheres to, or otherwise connects to, another portion of strap **110**.

In certain applications it is desired to grasp mobile unit **18** directly without wearing it on the finger. For example, in certain computer games, it may enhance the user's enjoyment to grasp mobile unit **18** and handle it as if it were a handgun or a joystick or some other configuration. However, because of its size and shape, it is not readily possible to grasp mobile unit **18** in these fashions.

To overcome this difficulty, a holder **510** of suitable shape is provided which can suitably accommodate mobile unit **18**. For example, holder **510** depicted in Figures 7-9 is designed to resemble an airplane joystick and somewhat also resembles a handgun handle. Holder **510** may be made of any suitable material, including but not limited to, plastic, such as a suitable polyurethane, wood or metal.

Holder **510** is formed with a recession **512** which readily accommodates the body of mobile unit **18**. Holder **510** further features a slot **514** which accommodates the open strap **110** of mobile unit **18**. Holder features a suitable mechanism for firmly attaching strap **110** of mobile unit **18**. For example, the configuration of Figure 7 shows a pair of attachment sections **516** and **518**, which may be made of the same material as strap **110**, although other attachment mechanisms, including, but not limited to, a single continuous attachment which extends the length of slot **514**, may be envisioned. Additional mechanisms for connecting mobile unit **18** to holder **510** may be envisioned including, but not limited to, various snap mechanisms, clamping mechanisms, and the like. Alternatively, strap **110** may be looped over a complementary member of holder **510** which resembles the user's finger.

When it is desired to use mobile unit **18** while grasping mobile unit **18** in a certain manner, a suitable holder **510** is chosen, mobile unit **18** is removed from the finger by undoing strap **110**. The body of mobile unit **18** and strap **110** are then placed and secured into recessions in holder **510** and the unit is now ready for use, as shown in Figure 9.

While the invention has been described with respect to a limited number of embodiments, it will be appreciated that many variations, modifications and other applications of the invention may be made.

## Claims

1. A computer input assembly for inputting information to a computer system by a user which can be alternately worn on a user's finger or grasped by the user's hand, comprising:
(a) a mobile unit, said mobile unit including a transmitter for transmitting signals;
(b) means for detachably connecting said mobile unit to the user's finger;
(c) a stationary receiving system for receiving said transmitted signals;
(d) processing means for processing said received signals to produce information usable by the computer system related to the position of said mobile unit; and
(e) a holder for accommodating said mobile unit so as to allow the user to grasp said mobile unit with his hand.

2. An input assembly as in claim 1, wherein the position of said mobile unit is determined by said processing means by using the time required for said signals transmitted by said transmitter to reach said receiving system.

3. An input assembly as in claim 2, further comprising timing means electrically connected to said transmitter and to said receiving system for use in determining the time required for said signals transmitted by said transmitter to reach said receiving system.

4. An input assembly as in claim 2, wherein said mobile unit further includes a secondary transmitter transmitting pulses of much greater speed than that of said transmitted signals, and wherein said pulses are used in determining the time required for said signals transmitted by said transmitter to reach said receiving system.

5. An input assembly as in claim 4, wherein said transmitted signals are ultrasonic and said pulses are electromagnetic.

6. An input assembly as in claim 1, wherein said mobile unit is a wireless unit.

7. An input assembly as in claim 1, wherein said mobile unit further includes an electric wire through which electric power is supplied to said transmitter.

8. An input assembly as in claim 1, wherein said mobile unit further includes an electric power source to supply electric power to said transmitter.

9. An input assembly as in claim 1, wherein said mobile unit further includes at least one key for providing additional information to the computer system.

10. An input assembly as in claim 1, wherein said transmitted signals are ultrasonic.

11. An input assembly as in claim 1, wherein said holder resembles a joystick.

12. An input assembly as in claim 1, wherein said holder resembles a handgun handle.

13. An input assembly as in claim 1, wherein said holder includes a recession for accommodating said mobile unit.

14. An input assembly as in claim 1, wherein said holder includes means for attaching said mobile unit.

15. An input assembly as in claim 1, wherein said stationary receiving system includes at least two spaced receivers and the position of said mobile unit is determined in at least two dimensions.

16. An input assembly as in claim 1, wherein said stationary receiving system includes at least three spaced receivers and the position of said mobile unit is determined in at least three dimensions.

17. A computer assembly device for inputting information to a computer system by a user, comprising:
(a) a stationary transmitter for transmitting signals;
(b) a mobile unit, said mobile unit including a reflector for reflecting said transmitted signals;
(c) means for detachably connecting said mobile unit to the user's finger;
(d) a stationary receiving system for receiving said reflected signals;
(e) processing means for processing said received signals to produce information usable by the computer system related to the position of said mobile unit; and
(f) a holder for accommodating said mobile unit so as to allow the user to grasp said mobile unit with his hand.

18. An input assembly as in claim 17, wherein the position of said mobile unit is determined by said processing means by using the time required for said signals reflected by said reflector to reach said receiving system.

19. An input assembly as in claim 17, wherein said holder resembles a joystick.

20. An input assembly as in claim 17, wherein said holder resembles a gun handle.
